# EUROPEAN PATENT SPECIFICATION

(11) **EP 2 460 418 B1**
(45) Date of publication and mention of the grant of the patent: **19.03.2014**
(21) Application number: 10804553.5
(22) Date of filing: 30.07.2010
(51) Int. Cl.: A23L 2/00, A23C 11/10, A23L 1/20, A23L 2/38, A23L 2/70, C12G 3/04

(54) **CARBONATED DRINK COMPRISING SOYBEAN FLOUR OR SOYBEAN MILK**
KOHLENSÄUREHALTIGES GETRÄNK MIT SOJABOHNENMEHL ODER SOJABOHNENMILCH
BOISSON GAZEUSE COMPRENANT DE LA FARINE DE SOJA OU DU LAIT DE SOJA

(30) Priority: 31.07.2009 JP 2009180075; 07.08.2009 JP 2009185172; 19.04.2010 JP 2010096384
(43) Date of publication of application: 06.06.2012
(73) Proprietor: Otsuka Pharmaceutical Co., Ltd., Tokyo 101-8535 (JP)
(72) Inventor: KITSUTAKA, Hiroshi, Osaka-shi Osaka 541-0045 (JP); HORIO, Sachio, Osaka-shi Osaka 541-0045 (JP); ODAGIRI, Hisa, Osaka-shi Osaka 541-0045 (JP); HONJO, Kaori, Osaka-shi Osaka 541-0045 (JP); NAGAYASU, Machiko, Osaka-shi Osaka 541-0045 (JP)
(74) Representative: HOFFMANN EITLE
(86) International application number: PCT/JP2010/062917
(87) International publication number: WO 2011/013807

(56) References cited:
- GB-A- 1 363 950
- JP-A- 58 056 664
- JP-A- 60 047 637
- JP-A- 61 047 178
- JP-A- 62 006 649
- US-A1- 2003 113 408
- US-A1- 2005 074 535
- US-A1- 2008 206 415

## Description

### [Technical Field]

The present invention relates to a carbonated beverage containing soybean powder and/or soymilk. More specifically, the present invention relates to a carbonated beverage that, while containing soybean powder and/or soymilk, has a refreshing carbonic acid flavor as well as nutrients and good flavor derived from soybeans, without causing coagulation of the soybean-derived ingredient.

### [Background Art]

Soybeans are called the meat of the field. They are rich in protein having an amino acid composition similar to that of animal protein, and contain good quality protein comparable to that of meat and eggs. Soybeans are also rich in oil (fat), and 50% or more thereof is linoleic acid, which functions to decrease blood cholesterol. It is known that soybeans are effective in preventing adult diseases, in particular, high blood pressure. Further, soybeans also contain lecithin, and are known to be effective in preventing dementia by acting on brain cells. Still further, soybeans also contain nutrients such as vitamins, including vitamin B1, vitamin B2, vitamin E, vitamin K, etc.; calcium; potassium; fiber; etc. These nutrients are known to be effective in relieving fatigue and preventing aging, constipation, etc. It has been reported that soybeans also contain various isoflavones having mild female hormone-like action, and are effective in preventing or improving menopausal symptoms, osteoporosis, etc.

As described above, soybeans contain various useful nutrients, and have been drawing attention as a non-meat food material having a high nutritional value and a good nutritional balance. In response to the recent health consciousness of consumers, a number of various food products and beverages that use soybeans have been developed.

At the same time, soybean-derived ingredients (particularly, soybean protein) are easily aggregated in nature. Therefore, when preparing a beverage containing soybean powder and soymilk, it is imperative to provide stability so as to prevent coagulation of the beverage. In particular, when soybean powder and soymilk are included in a carbonated beverage, the soybean-derived ingredient is very easily aggregated, and the stability is very likely to be impaired.

There is a conventionally reported method of preparing a soymilk-containing carbonated beverage with improved stability. The method comprises including 3% or lower of soybean solids content, adjusting the pH to within a range of 2.5 to 4.0, and injecting 2.5 gas volumes of carbon dioxide into the beverage (see Patent Literature 1). However, according to Patent Literature 1, when the soybean solids content is 4% or higher, the product cannot be commercialized as a carbonated beverage. The carbonated beverage of Patent Literature 1 has a drawback in that the content of the soybean-derived ingredient that can be included is limited, and thus the soybean-derived nutrients and flavor cannot be sufficiently provided. Further, it is described that the stability of the carbonated beverage of Patent Literature 1 is impaired when carbon dioxide is injected with the pH adjusted to 4 or higher. The beverage provided is simply an acidic beverage. The beverage cannot be provided as a beverage in the neutral region in which the inherent flavor of soybeans can be exploited.

As described above, conventional technology cannot achieve a carbonated beverage that can sufficiently provide the inherent flavor of soybeans without causing aggregation of the ingredient or coagulation of the beverage even when the content of the soybean-derived ingredient is high, and the development of such a beverage is much needed.

### [Citation List]

### [Patent Literature]

[PTL 1] Japanese Unexamined Patent Publications 60-47637 and 62-006649, as well as US 2005/074535, relate to the manufacture of beverages comprising soyamilk.

### [Summary of Invention]

### [Technical Problem]

An object of the present invention is to provide a carbonated beverage containing soybean powder or soymilk, wherein the carbonated beverage is provided with a refreshing carbonic acid flavor as well as nutrients and good flavor derived from soybeans, without causing coagulation of the soybean-derived ingredient even when the content of the soybean-derived ingredient is high.

### [Solution to Problem]

The present inventors conducted intensive studies in an attempt to solve the above-described problem. Although the pH of regular carbonated beverages is adjusted to within a range of about 3 to 4, the present inventors decided to adjust the pH of a carbonated beverage containing soybean powder and/or soymilk to 5.7 or higher, and unexpectedly found that, with such a pH range, it is possible to provide a carbonated beverage with a refreshing carbonic acid flavor as well as nutrients and good flavor derived from soybeans, without causing coagulation of the soybean-derived ingredient even when the content of the soybean-derived ingredient is high. The present invention has been completed by conducting further studies based on such findings.

Specifically, the present invention provides a carbonated beverage and a method of producing the same as described in the following embodiments.

Item 1. A carbonated beverage comprising soybean powder and/or soymilk, wherein its pH is 5.7 or higher.

Item 2. The carbonated beverage according to Item 1 , wherein the soybean-derived solids content is 1 to 30 wt%.

Item 3. The carbonated beverage according to Item 1, further comprising a saccharide.

Item 4. The carbonated beverage according to Item 3, wherein the sccharide is at least one member selected from the group consisting of glucose, sucrose, fructose, high fructose corn syrup, starch syrup, caramel, indigestible dextrin, polydextrose, dextrin, sorbitol, isomaltulose, and maltitol.

Item 5. The carbonated beverage according to Item 3, wherein the proportion of saccharide is 0.1 to 30 wt%.

Item 6. The carbonated beverage according to Item 1, wherein the gas volumes of carbon dioxide is 0.5 to 3.5 gas.

Item 7. The carbonated beverage according to Item 1, wherein the viscosity at 20°C is equal to or less than 1,000 mPa·s.

Item 8. The carbonated beverage according to Item 1, wherein its Brix value is 4 to 23.

Item 9. The carbonated beverage according to Item 1, wherein its appearance is stable without coagulation of a soybean-derived ingredient even when kept at 25° C for 90 days.

Item 10. A method of producing a carbonated beverage comprising soybean powder and/or soymilk, comprising:
obtaining a carbonated beverage comprising soybean powder and/or soymilk and having a pH of 5.7 or higher; and
pouring the above-obtained carbonated beverage into a container.

### [Advantageous Effects of Invention]

The present invention provides a carbonated beverage containing soybean powder or soymilk, without causing coagulation of the soybean-derived ingredient regardless of the content of the soybean-derived ingredient. Further, the carbonated beverage of the present invention has a refreshing carbonic acid flavor as well as nutrients and good flavor derived from soybeans, and is capable of satisfying both nutrient needs and sensory needs.

The carbonated beverage of the present invention is also excellent in long-term stability at room temperature, and is very useful for practical application of carbonated beverages containing soybean powder and/or soymilk on a commercial basis.

Additionally, when soybean powder is used as the soybean ingredient, the nutritional value of the carbonated beverage of the present invention is very high because the carbonated beverage contains almost all of the nutrients contained in soybeans. There have never been any reports of a carbonated beverage containing soybean powder. The present invention provides a soybean powder-containing carbonated beverage, which can be put into practice on a commercial basis, for the first time in the world. The carbonated beverage is expected to be a favorable response to the health consciousness of consumers, which has been increasing in recent years, as well as the diversifying preferences of the consumers.

### [Brief Description of Drawings]

[Fig. 1-1]

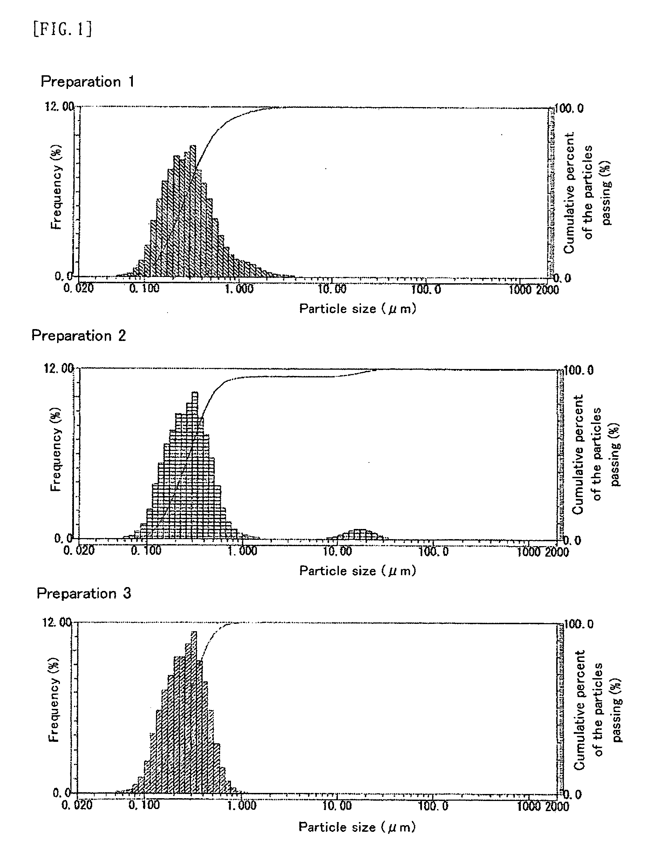

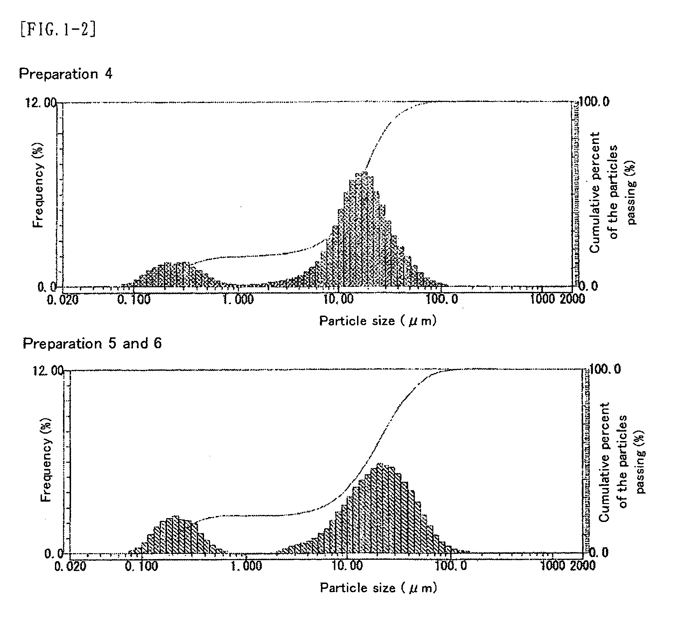

   Fig. 1-1 shows the particle size distribution measurement results of the particles dispersed in preparations 1 to 3 used for the preparation of carbonated beverages in Example 1.
[Fig. 1-2]
   Fig. 1-2 shows the particle size distribution measurement results of the particles dispersed in preparations 4 to 6 used for the preparation of carbonated beverages in Example 1.
[Fig. 2-1]

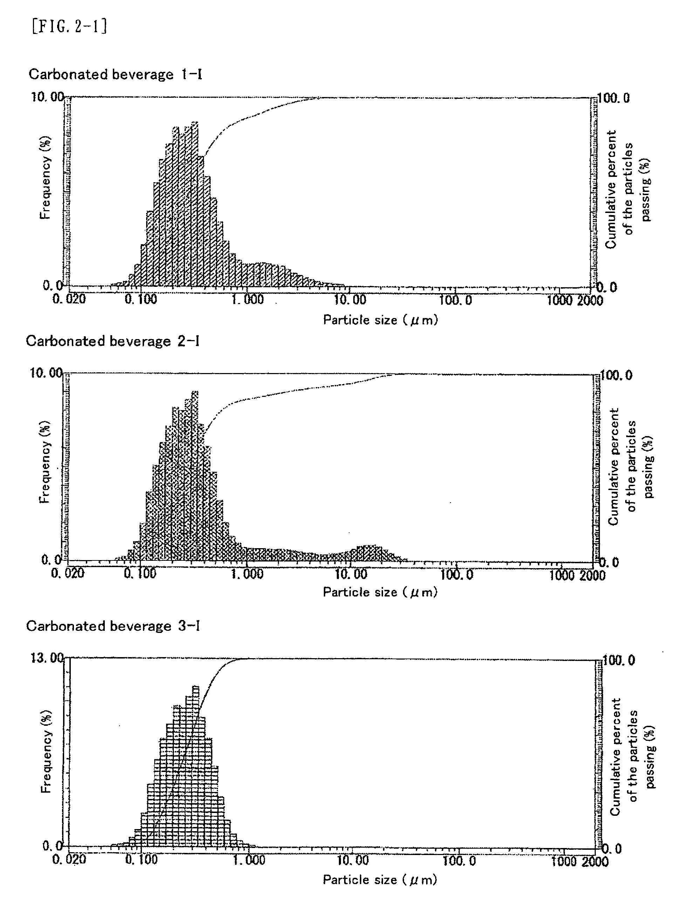

   Fig. 2-1 shows the particle size distribution measurement results of the particles dispersed in carbonated beverages 1-I to 3-1 produced in Example 2.
[Fig. 2-2]

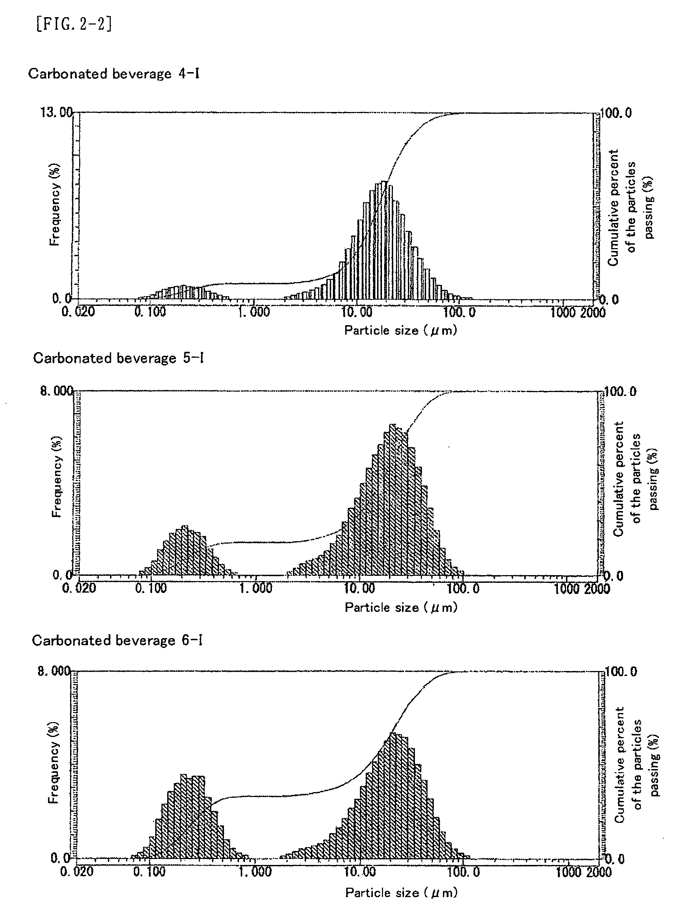

   Fig. 2-2 shows the particle size distribution measurement results of the particles dispersed in carbonated beverages 4-1 to 6-I produced in Example 2.
[Fig. 3]

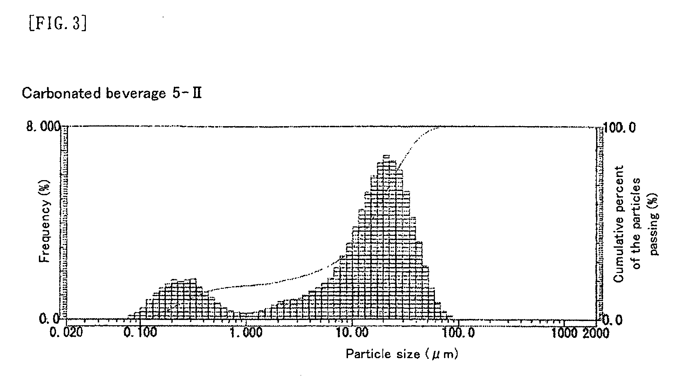

   Fig. 3 shows the particle size distribution measurement results of the particles dispersed in carbonated beverage 5-II produced in Example 2.
[Fig. 4-1]

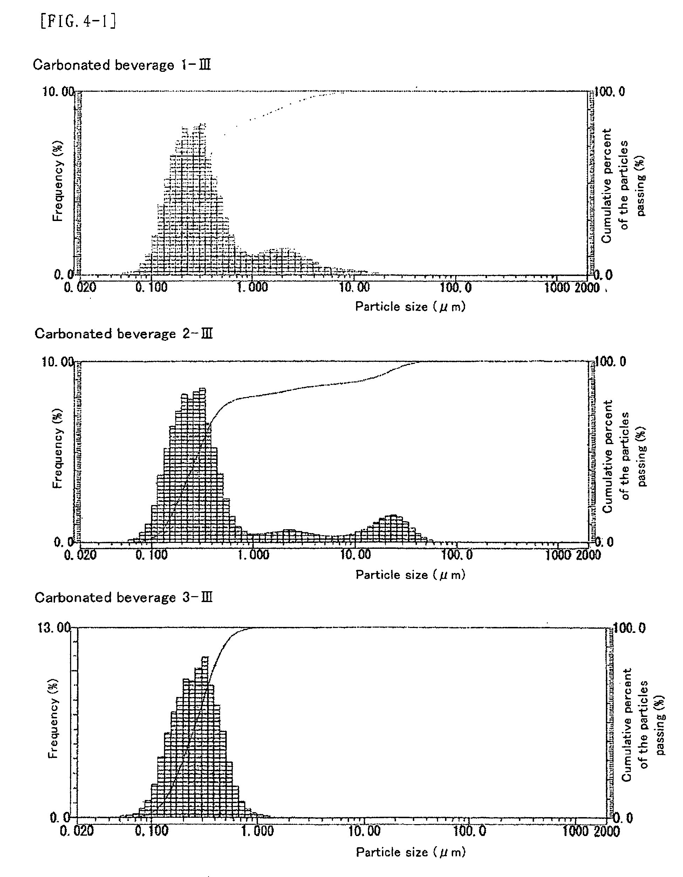

   Fig. 4-1 shows the particle size distribution measurement results of the particles dispersed in carbonated beverages 1-III to 3-III produced in Example 2.
[Fig. 4-2]

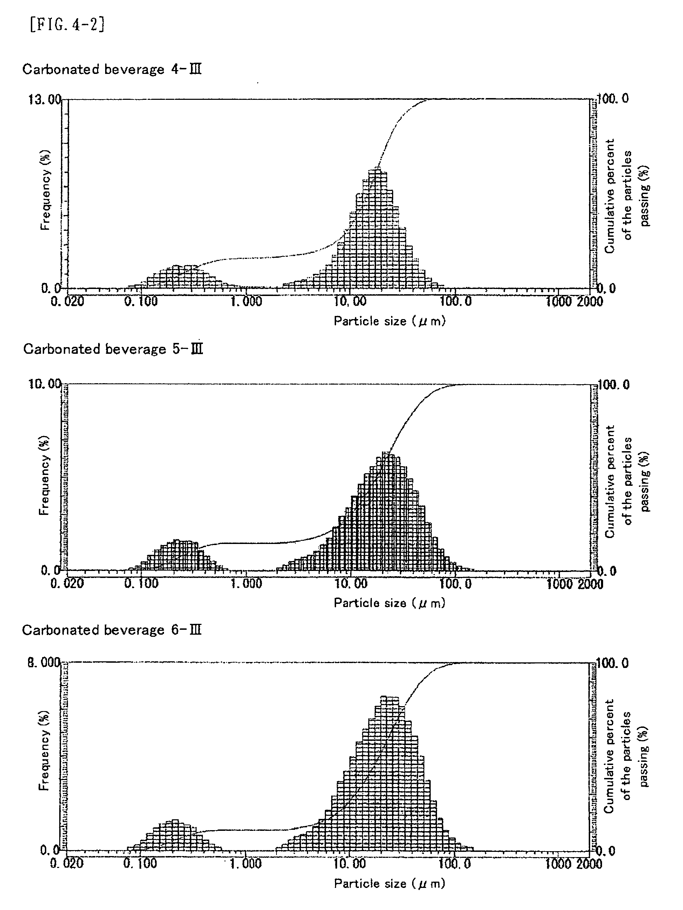

   Fig. 4-2 shows the particle size distribution measurement results of the particles dispersed in carbonated beverages 4-III to 6-III produced in Example 2.
[Fig. 5]

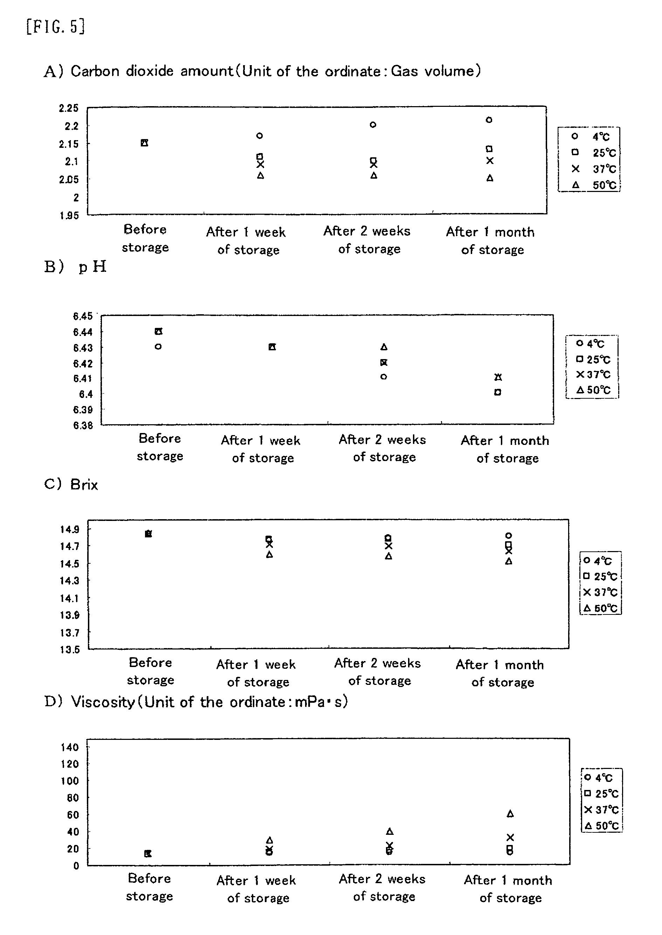

   Fig. 5 shows the measurement results of the carbon dioxide amount, pH, Brix, and viscosity of the carbonated beverage of Example 5 over time during the storage at 4°C or 50°C.

### [Description of Embodiments]

The carbonated beverage of the present invention is characterized by containing soybean powder and/or soymilk as the soybean-derived ingredient, and having a pH of 5 or higher. The carbonated beverage of the present invention is described in detail below.

Soybean powder that is included in the carbonated beverage of the present invention may be soybean powder that is obtained by heating and grinding soybeans. There is no particular limitation to the soybean powder insofar as it can be used in general soybean beverages.

Soybean powder used for the carbonated beverage of the present invention may, for example, be produced by the following method.

First, raw soybeans are subjected to careful selection, as needed, in order to remove halved beans, crushed beans, worm-eaten beans, other seeds, contaminants, etc. The raw soybeans may be subjected to washing treatments such as water washing or the like in order to remove dust, dirt, etc. attached to the surface of the soybeans. Further, the raw soybeans that are used are subjected to dehulling using an appropriate dehulling apparatus, auxiliary dehulling apparatus, etc. according to a conventional method. Note that, in the dehulling treatment, it is preferable to separate the skin of the soybeans while minimizing the mechanical damage, such as cracking, breaking, etc. to the cotyledon, because when the cells of the leaves are physically damaged, enzymes act on soybean oil, resulting in expression of a grassy smell.

Next, the raw soybeans are subjected to a heating treatment by steaming or boiling. The heating treatment by steaming is preferable in view of obtaining soybean powder that, while maintaining all of the nutrients contained in the soybeans as much as possible, has good flavor, texture, and reduced soybean smell. The heating treatment by steaming may usually be performed by causing the raw soybeans to contact with moisture at 65 to 105°C for 30 seconds to 30 minutes. The heating treatment by boiling may be performed by immersing the raw soybeans in boiling water.

The thus heat-treated, processed soybeans are subjected to a grinding treatment, thereby obtaining soybean powder. In view of facilitating the grinding treatment, the heat-treated, processed soybeans are preferably subjected to a drying treatment prior to the grinding treatment. Specifically, a preferable method is, for example, one in which the heat-treated, processed soybeans are first pressed flat into flakes by a roll, and then subjected to the drying treatment. The drying treatment can be performed by employing a known method such as drying under reduced pressure, air drying, drying by heating, etc. Drying under reduced pressure is preferable in view of maintaining good texture and flavor while suppressing the loss of useful nutrients. The grinding treatment may be performed using various grinding apparatuses used for powdering in the relevant technical field. Specific examples of the grinding apparatuses include an air grinder.

The particle size of the soybean powder used for the carbonated beverage of the present invention is not particularly limited, and can be suitably set within a range that does not impair the flavor of the carbonated beverage.

Further, soymilk that is included in the carbonated beverage of the present invention may be soymilk that is generally used. Methods of producing soymilk are known in the relevant technical field. Specifically, soymilk can be produced by smashing dehulled raw soybeans; adding water thereto to perform wet milling so as to form a suspension (emulsified beans, i.e., bean liquid) ; heating this suspension as needed; and removing the solids (bean curd refuse) by a solid-liquid separation treatment.

The carbonated beverage of the present invention may contain, as the soybean-derived ingredient, either one of the above-described soybean powder and soymilk, or a combination of both of them. Soymilk is produced by removing bean curd refuse. In contrast, soybean powder substantially contains all of the nutrients contained in soybeans. Further, when soybean powder is used, the resulting beverage is filling and has no grassy smell, compared to soymilk. Therefore, soybean powder is preferable as the soybean-derived ingredient to be included in the beverage.

In the carbonated beverage of the present invention, the content of the soybean powder and/or soymilk is not particularly limited. For example, the range of the soybean-derived solids content of soybean powder and/or soymilk is 1 to 30 wt%, preferably 3 to 21 wt%, further preferably 5 to 10 wt%, particularly preferably 7 to 10 wt%. As described above, although the carbonated beverage of the present invention contains a high amount of soybean-derived solids, it has a refreshing carbonic acid flavor and can maintain a stable condition of the soybean-derived ingredient without causing it to coagulate. Specifically, the carbonated beverage of the present invention can be provided with a refreshing carbonic acid flavor as well as excellent stability, while fully exploiting the flavor and nutrients derived from the soybean-derived ingredient due to the high content of the soybean-derived ingredient in the carbonated beverage. Note that the term "soybean-derived solids content" used in the present specification refers to the amount of soybean-derived ingredient measured using a microwave drying moisture/solids analyzer.

The pH of the carbonated beverage of the present invention is adjusted to 5.7 or higher. The carbonated beverage can be prepared without causing coagulation of the soybean-derived ingredient by satisfying the above-described pH rangeThe pH is preferably in the range of from 6.0 to 7.0, further preferably 6.2 to 6.6, in view of stably maintaining suppression of coagulation of the soybean-derived ingredient in the carbonated beverage of the present invention for a long period of time. The pH of the carbonated beverage of the present invention is adjusted by using a known pH-adjusting agent that can be used in food products. Generally, because carbonic acid contained in carbonated beverages is an acidic substance, the carbonated beverage of the present invention can be adjusted to the above-described pH range by adding, for example, an alkaline agent such as sodium hydroxide, sodium hydrogen phosphate, potassium hydroxide, tetrapotassium pyrophosphate, tripotassium pyrophosphate, calcium hydroxide, sodium bicarbonate, dipotassium hydrogenphosphate, tripotassium phosphate, arginine, etc. These pH-adjusting agents may be used alone, or in a combination of two or more.

Further, a saccharide may be included in the carbonated beverage of the present invention. The effect of suppressing coagulation of the soybean-derived ingredient can be further improved by containing a saccharide while satisfying the above-described pH conditions. The saccharide that is included in the carbonated beverage of the present invention is not particularly limited insofar as it can be used in food products. Examples thereof include glucose, sucrose, fructose, lactose, liquid sugars (for example, high fructose corn syrup), glutinous starch syrup, caramel, indigestible dextrin, polydextrose, dextrin, sorbitol, isomaltulose, maltitol, stevia, *Siraitia grosvenorii*, etc. Of these, glucose, sucrose, fructose, liquid sugars (for example, high fructose corn syrup), glutinous starch syrup, caramel, indigestible dextrin, polydextrose, dextrin, sorbitol, isomaltulose, and maltitol are examples of saccharides that strongly act on the enhancement of the effect of suppressing coagulation of the soybean-derived ingredient. Sucrose and polydextrose are particularly preferable because they provide further excellent stability to the carbonated beverage by stably suppressing coagulation of the soybean-derived ingredient for a long period of time in the above-described pH ranges. These saccharides may be used alone, or in a combination of two or more.

When the saccharide is included in the carbonated beverage of the present invention, the content thereof is not particularly limited. For example, the content is in the range of from 0.1 to 30 wt%, preferably 1 to 20 wt%.

The viscosity of the carbonated beverage of the present invention may be suitably adjusted within a viscosity range suitable for carbonated beverages. For example, the viscosity at 20° C is generally 1,000 mPa·s or lower, preferably 1 to 800 mPa·s, further preferably 1 to 500 mPa·s, furthermore preferably 4 to 100 mPa·s. When soybean powder is used as the soybean-derived ingredient, it is possible to stably suppress coagulation of the soybean-derived ingredient for a long period of time and provide further excellent stability to the carbonated beverage by adjusting the pH to within the above-described ranges and satisfying the above-described viscosity ranges. The adjustment of viscosity is known in the relevant technical field, and is performed, for example, by suitably adjusting the proportions of ingredients that affect viscosity (for example, soybean powder, soymilk, saccharide, thickener, etc.). Note that, in the present invention, the above-described viscosity values are measured by a B-type viscometer (rotor No. 19, rotational speed of 6.0 rpm, measurement temperature at 20°C).

The Brix value of the carbonated beverage of the present invention is not particularly limited, and may be suitably adjusted according to the amount of the soybean-derived ingredient and the like. For example, the Brix value is 4 to 23, preferably 12 to 23, more preferably 14 to 16. When the pH value and the Brix value are within the above-described ranges, coagulation of the soybean-derived ingredient can be suppressed for a long period of time, and further excellent preservation stability can be provided to the carbonated beverage.

The amount of carbon dioxide in the carbonated beverage of the present invention is suitably adjusted taking into account the carbonic acid flavor (refreshing feeling and the like from carbonic acid) that is imparted to the carbonated beverage. For example, the amount of carbon dioxide is 0.5 to 3.5 gas volumes, preferably 1 to 3.5 gas volumes, further preferably 1.5 to 3.5 gas volumes. Satisfying the above-described gas volumes can provide a refreshing feeling and the like from carbonic acid, and ensures good carbonic acid flavor. Note that the term "gas volume" used herein is a unit indicating the amount of carbon dioxide in the beverage. A value of the gas volume is the ratio of the volume of carbon dioxide dissolved in a beverage to the volume of the beverage in a normal condition (1 atmosphere pressure at 20°C).

As is the case with general beverages, suitable amounts of various additives may be included in the carbonated beverage of the present invention. Examples thereof include acidulants, sweeteners, preservatives, colorants, flavoring agents, stabilizers, antioxidants, emulsifiers, reinforcing agents, thickeners, etc.

The carbonated beverage of the present invention can suppress coagulation of the soybean-derived ingredient during preparation, and further can also suppress coagulation of the soybean-derived ingredient for a long period of time. An embodiment of the carbonated beverage of the present invention is one with stable appearance in which the soybean-derived ingredient does not coagulate, and the appearance of the liquid immediately after production remains substantially the same even when the carbonated beverage is kept at 25° C for 90 days, preferably 120 days, further preferably 180 days. Further, another embodiment of the carbonated beverage of the present invention is one with stable appearance in which the soybean-derived ingredient does not coagulate, and the appearance of the liquid immediately after production remains substantially the same even when the carbonated beverage is kept at 50°C for 5 days, preferably 14 days, further preferably 30 days.

The carbonated beverage of the present invention is prepared by adding predetermined amounts of composition ingredients to water, and injecting carbon dioxide thereinto.

When soybean powder is used as the soybean-derived ingredient in the carbonated beverage of the present invention, a liquid in which soybean powder and, as needed, other ingredients are added to water is preferably subjected to a homogenization treatment in order to enhance the dispersibility of soybean powder in the beverage. The homogenization treatment as described above results in a carbonated beverage having a further excellent texture, in particular, a smooth texture. The homogenization treatment can be performed using a general homogenizer. Specifically, the treatment is performed using a high-pressure homogenizer (LAB40) manufactured by Gaulin, under the conditions of about 200 to 1,000 kgf/cm², preferably about 300 to 800 kgf/cm².

In the present invention, the injection of carbon dioxide can be performed by a known method, such as a pre-mix method, post-mix method, or the like. Additionally, in order to suppress deterioration of the beverage of the present invention, oxygen contained in the solution may be removed by deaerating the solution prior to the injection of carbon dioxide.

The carbonated beverage of the present invention is poured into a hermetically-sealed container and supplied. The hermetically sealed container into which the carbonated beverage of the present invention is poured is not particularly limited, and may be any of a glass bottle, polyethylene terephthalate bottle, can container, and the like. Examples of the hermetically sealed container include bottles such as a black glass bottle, brownish-red glass bottle covered with shrink film, and the like.

Conditions to sterilize the carbonated beverage of the present invention are not particularly limited. The carbonated beverage may be sterilized by thermal sterilization or the like, or a mixture of raw materials may be poured into the container by an aseptic technique.

### [EXAMPLES]

The present invention is described below in detail with reference to Examples. However, the scope of the invention is not limited to these Examples.

### Example 1 Production of soybean powder- or soymilk-containing carbonated beverages

Soybean powder- or soymilk-containing carbonated beverages were produced according to the following method.

### 1. Preparation of soybean-derived ingredient-containing preparations

The formulations shown in Table 1 were used as soybean-derived ingredient-containing preparations. More specifically, preparations 1 to 3 were commercially available soymilk products; preparations 4 and 5 were commercially available soybean beverages (soybean powder-containing beverages); and preparation 6 was obtained by two-fold dilution of preparation 5 with water. Figs. 1-1 and 1-2 show the particle size distribution measurement results of the particles dispersed in each preparation. The median size and particle size distribution were measured using a laser diffraction/scattering particle size distribution analyzer ("LA-750", manufactured by Horiba, Ltd.). The viscosity was measured with a Brookfield viscometer ("TVB-10", manufactured by Toki Sangyo Co., Ltd.) at 20°C using rotor No. 19 at a rotational speed of 6.0 rpm.

**[Table 1]**

| | Preparations | | | | | |
|---|---|---|---|---|---|---|
| | 1 | 2 | 3 | 4 | 5 | 6 |
| Soybean-derived ingredient | Soymilk | Soymilk | Soymilk | Soybean powder | Soybean powder | Soybean powder |
| Amount, on a solids basis, of the soybean-derived ingredient (wt%) | 12 | 10 | 8 | 14 | 14 | 7 |
| Brix | 14.16 | 14.53 | 11.28 | 16.28 | 15.94 | 7.71 |
| Viscosity (mPa· s) | 12.9 | 9.9 | 4.6 | >200 | 92.8 | 11.9 |
| pH | 6.49 | 6.62 | 6.68 | 6.54 | 7.04 | 7.19 |
| Median size of the dispersed particles (µm) | 0.279 | 9.277 | 0.263 | 14.8 | 16.9 | 16.0 |

### 2. Preparation of carbonic acid solutions

Carbonic acid solutions were prepared according to the formulations shown in Table 2. A carbon dioxide mixer was used to load carbon dioxide. Carbonic acid solution I contained a sugar and an alkali chemical in predetermined amounts. Carbonic acid solution II contained a sugar in a predetermined amount. Carbonic acid solution III contained an alkaline chemical in a predetermined amount. The amount of carbon dioxide was measured using a gas volume analyzer ("GVA-500B", manufactured by Kyoto Electronics Manufacturing Co., Ltd.).

**[Table 2]**

| | Carbonic acid solutions | | |
|---|---|---|---|
| | I | II | III |
| Fructose-glucose liquid sugar | appropriate amount | appropriate amount | - |
| Alkali chemical | appropriate amount | - | appropriate amount |
| Brix | 19.15 | 17.1 | 2.28 |
| Carbon dioxide amount | 5.29 gas volumes | 4.0 gas volumes | 4.46 gas volumes |
| PH | 6.25 | 3.83 | 6.16 |

### 3. Preparation of soybean powder- or soymilk-containing carbonated beverages

50 g of one of the preparations and 50 g of one of the carbonic acid solutions obtained above were mixed to prepare a carbonated beverage. The carbonated beverage was poured into a glass container, and the container was sealed. Carbonated beverages were prepared in this manner.

### Example 2 Evaluation of physical properties of the soybean powder- or soymilk-containing carbonated beverages

The pH, carbon dioxide amount, Brix, viscosity, particle size distribution, and median size of each carbonated beverage obtained in Example 1 were measured by the same methods as in Example 1. The appearance of each beverage immediately after production was also evaluated according to the following criteria.

### <Criteria for the appearance of the carbonated beverages immediately after production>

A: The beverage sample was in a liquid state with no observed coagulation of the soybean-derived ingredient; the sample is thus usable as a beverage.
B : Coagulation of the soybean-derived ingredient was observed; the entire sample was coagulated into a tofu-like curd (a gel) .

Tables 3 to 5 show the results. Figs. 2-1, 2-2, 3, 4-1, and 4-2 show the particle size distribution measurement results.

**[Table 3]**

| | | Carbonated beverages | | | | | |
|---|---|---|---|---|---|---|---|
| | | 1-I | 2-I | 3-I | 4-I | 5-I | 6-I |
| Types of preparation and carbonated beverage to be mixed | Preparation | 1 | 2 | 3 | 4 | 5 | 6 |
| | Carbonic acid solution | I | I | I | I | I | I |
| Evaluation results of physical properties and appearance of carbonated beverage | pH | 6.29 | 6.28 | 6.24 | 6.21 | 6.33 | 6.27 |
| | Amount, on a solids basis, of the soybean-derived ingredient (wt%) | 6 | 5 | 4 | 7 | 7 | 3.5 |
| | Carbon dioxide amount | 2.28 gas volumes | 2.35 gas volumes | 2.25 gas volumes | 2.27 gas volumes | 2.06 gas volumes | 2.02 gas volumes |
| | Brix | 16.54 | 15.44 | 15.10 | 8.60 | 17.36 | 13.62 |
| | Viscosity (mPa·s) | 3.9 | 8.0 | 3.9 | 10.4 | 17.3 | 3.7 |
| | Median size of the dispersed particles (µm) | 0.28 | 0.29 | 0.26 | 16.3 | 16.1 | 12.4 |
| | Appearance | A | A | A | A | A | A |

**[Table 4]**

| | | Carbonated beverages | | | | |
|---|---|---|---|---|---|---|
| | | 2-II | 3-II | 4-II | 5-II | 6-II |
| Types of preparation and carbonated beverage to be mixed | Preparation | 2 | 3 | 4 | 5 | 6 |
| | Carbonic acid solution | II | II | II | II | II |
| Evaluation results of physical properties and appearance of carbonated beverage | pH | 5.68 | 5.68 | 5.69 | 5.78 | 5.67 |
| | Amount, on a solids basis, of the soybean-derived ingredient (wt%) | 5 | 4 | 7 | 7 | 3.5 |
| | Carbon dioxide amount | - | - | - | 1.8 gas volumes | - |
| | Brix | - | - | - | 15.6 | - |
| | Viscosity (mPa·s) | - | - | - | 25 | - |
| | Median size of the dispersed particles (µm) | - | - | - | 17.0 | - |
| | Appearance | B | B | B | A | B |

| | | | | | | |
|---|---|---|---|---|---|---|
| No physical properties other than the pH were measured for carbonated beverages 1-II to 4-II and 6-II due to coagulation of the soybean-derived ingredient into a tofu-like curd (a gel) immediately after production. | | | | | | |

**[Table 5]**

| | | Carbonated beverages | | | | | |
|---|---|---|---|---|---|---|---|
| | | 1-III | 2-III | 3-III | 4-III | 5-III | 6-III |
| Types of preparatio n and carbonated beverage to be mixed | Preparation | 1 | 2 | 3 | 4 | 5 | 6 |
| | Carbonic acid solution | III | III | III | III | III | III |
| Evaluation results of physical properties and appearance of carbonated beverage | pH | 6.20 | 6.26 | 6.25 | 6.33 | 6.21 | 6.27 |
| | Amount, on a solids basis, of the soybean-derived ingredient (wt%) | 6 | 5 | 4 | 7 | 7 | 3.5 |
| | Carbon dioxide amount | 2.47 gas volume s | 2.65 gas volume s | 2.42 gas volume s | 2.27 gas volume s | 2.40 gas volume s | 2.15 gas volume s |
| | Brix | 7.1 | 6.9 | 6.6 | 8.6 | 8.5 | 4.3 |
| | Viscosity (mPa·s) | 5.0 | 5.4 | 2.7 | 23.7 | 13.2 | 2.9 |
| | Median size of the dispersed particles (µm) | 0.29 | 0.29 | 0.26 | 14.69 | 17.45 | 19.27 |
| | Appearance | A | A | A | A | A | A |

As shown in Tables 3 to 5, even in cases where the content of the soybean-derived ingredient, on a solids basis, is high, all the carbonated beverages 1-I to 6-I, 5-II and 1-III to 6-III had a pH of 5.7 or higher and a good appearance with no coagulation observed immediately after production. In contrast, all of the carbonated beverages having a pH below 5.7 (carbonated beverages 2-II to 4-II) underwent obvious coagulation immediately after production, and thus were not usable as beverages.

With respect to the median size and particle size distribution of the dispersed particles, the carbonated beverages 1-I to 6-I, 5-II, and 1-III to 6-III were almost equivalent to the preparations used therein (see Figs. 1-1, 1-2, 2-1, 2-2, 3, 4-1, and 4-2). These results also confirmed that coagulation of the soybean-derived ingredient did not occur in the carbonated beverages.

### Example 3-1 Evaluation 1 of stability of the soybean powder-or soymilk-containing carbonated beverages

To evaluate the stability of the carbonated beverages obtained above, the beverages were stored under severe conditions (at 50°C), and their appearance was evaluated using the following criteria.

### <Criteria for the appearance of the carbonated beverages after storage under severe conditions>

5: No change was observed compared to the state immediately after production.
4: Some precipitation was observed; the precipitate almost disappeared after gentle inversion of the container.
3: Some precipitation was observed; after gentle inversion of the container, although the amount of the precipitate was obviously decreased, a small amount of precipitate remained.
2: Although the entire sample was not coagulated into a tofu-like curd (a gel) or changed to a dehydrated state, obvious precipitation was observed; even after inversion of the container, the precipitate did not decrease, and remained unchanged.
1: The entire sample was coagulated into a tofu-like (gel-like) curd, or reduced to a dehydrated state.

First, to investigate the effect of pH on the stability of soybean powder- or soymilk-containing carbonated beverages, carbonated beverages 1-I to 6-I prepared above were stored under the above-mentioned severe conditions for 2 days, and their appearance after storage was compared. Table 6 shows the results. The results confirmed that carbonated beverages 1-I to 6-1 were stable, with no occurrence of coagulation of the soybean-derived ingredient even after storage under severe conditions. More specifically, the results showed that adjustment to a pH of 5.7 or higher, and particularly to a pH in the range of about 6.2 to about 6.6, is preferable to stably maintain the soybean powder- or soymilk-containing carbonated beverages while preventing coagulation of the soybean-derived ingredient.

For comparison, carbonated beverages with a final pH of 4 or 3 were prepared by changing the pH of the above carbonic acid solutions I to III. The soybean-derived ingredient was coagulated immediately after production. Thus, the resulting solutions were unsuitable as beverages.

**[Table 6]**

| Investigation of the effect of pH (50°C, after 2 days) | | |
|---|---|---|
| | pH of carbonated beverage | Appearance evaluation results |
| Carbonated beverage 1-I | 6.29 | 5 |
| Carbonated beverage 2-I | 6.28 | 5 |
| Carbonated beverage 3-I | 6.24 | 5 |
| Carbonated beverage 4-I | 6.21 | 5 |
| Carbonated beverage 5-I | 6.33 | 5 |
| Carbonated beverage 6-I | 6.27 | 5 |

To investigate the effect of a sugar on the stability of soybean powder- or soymilk-containing carbonated beverages, carbonated beverages 1-I and 1-III produced above were used as representative examples, and their appearance after 8 days of storage under the above-mentioned severe conditions was compared. Table 7 shows the results. The results confirmed that sugar-containing carbonated beverage 1-I is more stable than sugar-free carbonated beverage 1-III.

**[Table 7]**

| Investigation of the effect of addition of a sugar (50°C, after 8 days) | | | |
|---|---|---|---|
| | pH of carbonated beverage | Addition of a saccharide to carbonated beverage | Appearance evaluation results |
| Carbonated beverage 1-I | 6.29 | Yes | 5 |
| Carbonated beverage 1-III | 6.20 | No | 1 |

### Example 3-2 Evaluation 2 of stability of soybean powder-containing carbonated beverages

Soybean powder-containing carbonated beverages (Examples 4-1 and 4-2) were prepared according to the formulations shown in Table 8. The appearance of the carbonated beverages immediately after production was evaluated according to the same criteria as in Example 1. Subsequently, the carbonated beverages were stored under severe conditions (50°C) for 4 days, and their appearance after storage was evaluated according to the same criteria as in Example 3-1.

Table 8 also shows the results. The results show that immediately after production, the appearance of the carbonated beverages of Examples 3-2-1 and 3-2-2 was good, with no coagulation observed. However, after storage under severe conditions for 4 days, aggregation of the carbonated beverage of Example 3-2-2 occurred. In contrast, carbonated beverage 3-2-1 was stable, with no occurrence of coagulation of the soybean-derived ingredient even after storage under severe conditions for 4 days. More specifically, the results show that when a soybean powder- or soymilk-containing carbonated beverage has a pH in a specific range and also has a Brix of 12 or more, or a sugar concentration of 5 wt% or more, the beverage can be stably maintained for a long period of time with no coagulation of the soybean-derived ingredient.

**[Table 8]**

| | Example 3-2-1 | Example 3-2-2 |
|---|---|---|
| Preparation 5 shown in Table 1 | 50 wt% | 50 wt% |
| Granulated sugar | 5 wt% | 3 wt% |
| pH adjuster | Appropriate amount | Appropriate amount |
| Carbonated water | 39 wt% | 39 wt% |
| Water | Balance | Balance |
| Total amount | 100 wt% | 100 wt% |
| pH | 5.98 | 5.72 |
| Amount, on a solids basis, of the soybean-derived ingredient | 14 wt% | 14 wt% |
| Viscosity #1 | 6.5 | 7.6 |
| Carbon dioxide amount | 1.07 gas volumes | 1.32 gas volumes |
| Appearance immediately after production | A | A |
| Appearance after storage at 50°C for 4 days | 5 | 1 |

| | | |
|---|---|---|
| #1 The viscosity was measured under the same conditions as in Example 1. | | |

### Example 4 Sensory evaluation of the soybean powder- or soymilk-containing carbonated beverages

10 panelists drank carbonated beverages 1-I to 6-I obtained above, and evaluated the taste and flavor of each beverage. As a result, the following evaluation results were obtained from all of the panelists. More specifically, all of the carbonated beverages were evaluated as having a sufficiently good flavor derived from soybeans, and as providing a refreshing sensation felt in the mouth due to carbonic acid. Compared to soymilk-containing carbonated beverages 1-I to 3-I, soybean powder-containing carbonated beverages 4-1 to 6-1 have an excellent flavor, and no grassy smell.

### Examples 5 to 7 Production of soybean powder-containing carbonated beverages, and stability evaluation thereof

### 1. Production of soybean powder-containing carbonated beverages

Soybean powder-containing carbonated beverages were produced according to the formulations shown in Table 8. The soybean powder contained in the soybean powder-containing carbonated beverages was prepared by steaming halved soybeans, then drying and pulverizing the same. Coagulation or the like was not observed immediately after production in any of the soybean powder-containing carbonated beverages of Examples 5 to 7 shown below.

**[Table 9]**

| | Formulation and physical properties | | |
|---|---|---|---|
| | Example 5 | Example 6 | Example 7 |
| Soybean powder | 7 wt% | 7 wt% | 7 wt% |
| Sucrose | 8 wt% | 8 wt% | 8 wt% |
| Stevia | appropriate amount | - | appropriate amount |
| Polydextrose | - | appropriate amount | appropriate amount |
| pH adjuster | appropriate amount | appropriate amount | appropriate amount |
| Amount of carbon dioxide gas | 2.2 gas volumes | 2.2 gas volumes | 2.2 gas volumes |
| Water | Balance | Balance | Balance |
| pH | 6.4 | 6.4 | 6.4 |
| Brix | 15 | 15 | 15 |
| Viscosity (mPa·s)^{#1} | 14 | 14 | 14 |

| | | | |
|---|---|---|---|
| #1: The viscosity was measured with a Brookfield viscometer ("TVB-10", manufactured by Toki Sangyo Co., Ltd.) at 20°C using rotor No. 19 at a rotational speed of 6.0 rpm. | | | |

### 2. Evaluation of stability

The soybean powder-containing carbonated beverages produced above were stored in a dark place at 4°C, 25°C, 37°C, and 50°C for 1 month, and evaluated over time in terms of the physical properties (carbon dioxide amount, pH, Brix, viscosity) and taste. The viscosity was measured with a Brookfield viscometer ("TVB-10", manufactured by Toki Sangyo Co. , Ltd.) at 20°C using rotor No. 19 at a rotational speed of 6.0 rpm. Further, the soybean powder-containing carbonated beverages produced above were stored in a dark place at 4°C, 25°C, and 37°C for 3 months, and evaluated for their taste.

The flavor was assessed by a panel of 3 experts, based on the total evaluation of richness; heaviness; graininess; thickness; milkiness; smoothness; beany smell; grassy smell; harsh taste; bitterness; rawness; sweetness; aroma; acidic taste; top notes; solvent smell; fruitiness; ripeness; body; grainy smell; astringency; oily or fatty smell; metallic taste; medicinal taste; sourness; fermentation smell; etc.

Fig. 5 shows the evaluation results of the physical properties (carbon dioxide amount, pH, Brix) of the carbonated beverage of Example 5. As is clear from Fig. 5, when the soybean powder-containing carbonated beverage obtained above was stored at any temperature in the range of 4°C to 50°C, the carbon dioxide amount, pH, Brix, and viscosity of the beverage were substantially maintained. The results thus confirmed that the beverage has excellent storage stability. The physical properties of the carbonated beverages of Examples 6 and 7 were also similar to the results of the beverage of Example 5. No precipitation was observed in any of the carbonated beverages of Examples 5 to 7 after storage at any temperature in the range of 4°C to 50°C. Thus, the beverages were also stable in terms of appearance.

The taste of the carbonated beverages of Examples 5 to 7 was also evaluated. Even after storage at any temperature in the range of 4°C to 50°C for 1 month, all of the beverages maintained a good flavor that was in no way inferior to the flavor before storage, and all of the beverages were well-balanced between a soybean-derived flavor and a carbonic acid-derived refreshing sensation.

Further, the soybean powder-containing carbonated beverages obtained above were stored in a dark place at 4°C, 25°C, and 37°C for 3 months, and evaluated for their taste. The results confirmed that even after storage at 4°C, 25°C, and 37°C for 3 months, the carbonated beverages of Examples 5 to 7 maintained a soybean-derived rich taste, and also had a taste that was well-balanced overall; furthermore, the beverages were fragrant, and maintained a good flavor that was in no way inferior to the flavor immediately after storage.

The above results revealed that the carbonated beverages of the present invention have excellent storage stability such that the beverages can be stably maintained at room temperature for a long period of time, with no changes in physical properties and flavor.

## Claims

1. A carbonated beverage comprising soybean powder and/or soymilk, wherein its pH is 5.7 or higher.

2. The carbonated beverage according to claim 1, wherein the soybean-derived solids content is 1 to 30 wt%.

3. The carbonated beverage according to claim 1, further comprising a saccharide.

4. The carbonated beverage according to claim 3, wherein the saccharide is at least one member selected from the group consisting of glucose, sucrose, fructose, high fructose corn syrup, starch syrup, caramel, indigestible dextrin, polydextrose, dextrin, sorbitol, isomaltulose, and maltitol.

5. The carbonated beverage according to claim 3, wherein the proportion of saccharide is 0.1 to 30 wt%.

6. The carbonated beverage according to claim 1, wherein the gas volumes of carbon dioxide is 0.5 to 3.5.

7. The carbonated beverage according to claim 1, wherein the viscosity at 20°C is equal to or less than 1,000 mPa·s.

8. The carbonated beverage according to claim 1, wherein its Brix value is 4 to 23.

9. The carbonated beverage according to claim 1, wherein its appearance is stable without coagulation of a soybean-derived ingredient even when kept at 25° C for 90 days.

10. A method of producing a carbonated beverage comprising soybean powder and/or soymilk, comprising:
obtaining a carbonated beverage comprising soybean powder and/or soymilk and having a pH of 5.7 or higher; and
pouring the above-obtained carbonated beverage into a container.

## Patentansprüche

1. Kohlensäurehaltiges Getränk, das Sojabohnenpulver und/oder Sojamilch umfasst, worin sein pH 5,7 oder größer ist.

2. Kohlensäurehaltiges Getränk gemäß Anspruch 1, worin der Gehalt an von Sojabohnen abgeleiteten Feststoffen 1 bis 30 Gew.% ist.

3. Kohlensäurehaltiges Getränk gemäß Anspruch 1, das weiterhin ein Saccharid umfasst.

4. Kohlensäurehaltiges Getränk gemäß Anspruch 3, worin das Saccharid mindestens ein Element ausgewählt aus der Gruppe bestehend aus Glukose, Saccharose, Fruktose, Maissirup mit hohem Fruktosegehalt, Stärkesirup, Karamell, unverdauliches Dextrin, Polydextrose, Dextrin, Sorbitol, Isomaltulose und Maltitol ist.

5. Kohlensäurehaltiges Getränk gemäß Anspruch 3, worin der Anteil des Saccharids 0,1 bis 30 Gew.% ist.

6. Kohlensäurehaltiges Getränk gemäß Anspruch 1, worin das Gasvolumen von Kohlendioxid 0,5 bis 3,5 ist.

7. Kohlensäurehaltiges Getränk gemäß Anspruch 1, worin die Viskosität bei 20°C gleich oder weniger als 1.000 mPa·s ist.

8. Kohlensäurehaltiges Getränk gemäß Anspruch 1, worin dessen Brix-Wert 4 bis 23 ist.

9. Kohlensäurehaltiges Getränk gemäß Anspruch 1, worin dessen Erscheinungsbild ohne Koagulation eines von Sojabohnen abgeleiteten Inhaltsstoffs stabil ist, selbst wenn es 90 Tage lang bei 25°C gehalten wird.

10. Verfahren zur Herstellung eines kohlensäurehaltigen Getränks, das Sojabohnenpulver und/oder Sojamilch umfasst, umfassend:
Erhalten eines kohlensäurehaltigen Getränks, das Sojabohnenpulver und/oder Sojamilch umfasst und einen pH-Wert von 5,7 oder höher aufweist; und
Gießen des oben erhaltenen kohlensäurehaltigen Getränks in einen Behälter.

## Revendications

1. Boisson gazeuse comprenant de la farine de soja et/ou du lait de soja, dont le pH est de 5,7 ou supérieur.

2. Boisson gazeuse selon la revendication 1, dans laquelle la teneur en solides dérivés de soja est de 1 à 30 % en poids.

3. Boisson gazeuse selon la revendication 1, comprenant en outre un saccharide.

4. Boisson gazeuse selon la revendication 3, dans laquelle le saccharide est au moins un élément choisi dans le groupe comprenant le glucose, le saccharose, le fructose, le sirop de maïs riche en fructose, le sirop d'amidon, le caramel, la dextrine indigestible, le polydextrose, la dextrine, le sorbitol, l'isomaltulose et le maltitol.

5. Boisson gazeuse selon la revendication 3, dans laquelle la proportion de saccharide est de 0,1 à 30 % en poids.

6. Boisson gazeuse selon la revendication 1, dans laquelle le volume gazeux du dioxyde de carbone est de 0,5 à 3,5.

7. Boisson gazeuse selon la revendication 1, dans laquelle la viscosité à 20° C est inférieure ou égale à 1000 mPa·s.

8. Boisson gazeuse selon la revendication 1, dont la valeur Brix est de 4 à 23.

9. Boisson gazeuse selon la revendication 1, dont l'aspect est stable sans coagulation d'un ingrédient dérivé de soja, même lorsqu'elle est conservée à 25° C pendant 90 jours.

10. Procédé de production d'une boisson gazeuse comprenant de la farine de soja et/ou du lait de soja, comprenant :
l'obtention d'une boisson gazeuse comprenant de la farine de soja et/ou du lait de soja et ayant un pH de 5,7 ou supérieur ; et
le versement de la boisson gazeuse obtenue ci-dessus dans un récipient.
